# EUROPÄISCHE PATENTSCHRIFT

(11) **EP 1 234 748 B1**
(45) Veröffentlichungstag und Bekanntmachung des Hinweises auf die Patenterteilung: **12.11.2003**
(21) Anmeldenummer: 01104338.7
(22) Anmeldetag: 23.02.2001
(51) Int. Cl.: B62D 7/22, F16F 9/512

(54) **Dämpfungsventil für hydraulisch unterstütztes Lenkungssystem**
Damper valve for hydraulic power steering device
Soupape d'amortissement pour dispositif de direction assistée

(43) Veröffentlichungstag der Anmeldung: 28.08.2002
(73) Patentinhaber: Visteon Global Technologies, Inc., Dearborn, Michigan 48126 (US)
(72) Erfinder: Schymeczyk, Armin, Plymouth, Michigan 48170 (US); Sickert, Dirk, 50321 Brühl (DE)
(74) Vertreter: Bauer, Wulf, Dr.

(56) Entgegenhaltungen:
- DE-A- 19 620 975
- DE-A- 19 842 840
- FR-A- 1 112 598

## Beschreibung

Die Erfindung betrifft ein hydraulisch unterstütztes Lenkungssystem mit einem Lenkgetriebe, welches von einer hydraulischen Kolben-Zylindereinheit angetrieben wird.

Derartige Lenkungssysteme sind bereits seit langem bekannt. Weiterhin ist bekannt, dass durch eine ausgesprochene Leichtgängigkeit des Lenkgetriebes die Fahreigenschaften eines Fahrzeugs positiv beeinflusst werden können. Leichtgängige Lenkgetriebe machen die gesamte Lenkung jedoch anfällig für Oszillationen, die durch eine hydraulische Lenkungsunterstützung noch verstärkt werden können. Dies macht die Verwendung von Lenkungsdämpfern erforderlich, die Oszillationen im Lenkungssystem effektiv bedämpfen. Ein hydraulisch arbeitender Lenkungs-Stabilisator ist beispielsweise aus der US 4,467,884 bekannt.

Weiterhin kann sich bei hydraulisch unterstützten Lenkungssystemen eine unerwünschte Geräuschentwicklung ergeben ("Wasserleitungsschlagen"), wenn sprunghafte Druckänderungen im Hydrauliksystem auftreten und Druckspitzen in den Rücklauf des Systems gelangen. Diese können z.B. von äußeren Störungen ausgelöst werden, die im Fahrbetrieb auf die gelenkten Räder einwirken. Aus diesem Grunde werden oftmals hydrodynamisch dämpfende Elemente ("Drosseln oder Ausgleichsvolumen") in hydraulisch unterstützten Lenkungssystemen verwendet.

Aus der DE 28 38 151 A1 bekannt, dass eine hydraulische Kolben-Zylindereinheit vorteilhaft sowohl zur hydraulischen Unterstützung als auch als Lenkungsdämpfer eines Lenkungssystems fungieren kann.

Aus der DE 40 29 156 A1 ist bekannt, dass zur Unterdrückung unerwünschter Oszillationen oder sprunghafter Druckänderungen in einem hydraulisch unterstützten Lenkungssystem, in dem die Kolben-Zylinder-Einheit auch als Lenkungsdämpfer wirksam ist, vorteilhaft Dämpfungsventile in den Hydraulikzuleitungen der Zylinderhalbräume der Kolben-Zylinder-Einheit eingesetzt werden können, die nur in der Zulaufrichtung zu den Zylinderhalbräumen wirksam sind. Hierzu schlägt diese OS ein Dämpfungsventil vor, welches zwei Stromzweige aufweist, wobei in einem Zweig ein konventionelles Rückschlagventil mit großem Strömungsquerschnitt und im anderen Zweig ein entgegengesetzt wirksames Drossel-Rückschlagventil vorgesehen ist.

Weiterhin ist bekannt, dass zur Erzielung optimaler Lenkungseigenschaften eine geschwindigkeitsabhängige Wirksamkeit eines hydraulisch unterstützten Lenkungssystems vorteilhaft ist. Bei niedrigen Fahrzeuggeschwindigkeiten werden häufig große Lenkwinkeländerungen vorgenommen, z.B. beim Rangieren, bei denen sich eine hohe innere Dämpfung im Hydrauliksystem nachteilig auswirken kann. So führt eine hohe innere Dämpfung im Hydrauliksystem zu einer Begrenzung des maximalen Flusses von Hydraulikflüssigkeit in die Zylinderhalbräume der Kolben-Zylinder-Einheit, so dass die Stellgeschwindigkeit der Kolben-Zylinder-Einheit hierdurch limitiert ist. Nimmt der Fahrer schnellere Stellbewegungen vor, so führt dies zu einem Ausfall der hydraulischen Lenkungsunterstützung. Auf der anderen Seite ist bei höheren Fahrzeuggeschwindigkeiten die hydraulische Unterstützung von Lenkbewegungen aufgrund der deutlich geringeren Betätigungskräfte nicht nur nicht erforderlich, sondern sie kann sogar zu einer Abnahme der Fahrstabilität aufgrund ihrer Anfälligkeit für Oszillationen sein. Daher ist bei höheren Fahrzeuggeschwindigkeiten eine vollständige Abschaltung der hydraulischen Lenkungsunterstützung, zumindest aber eine erhöhte Dämpfungswirkung der als Lenkungsdämpfer wirksamen Kolben-Zylinder-Einheit vorteilhaft.

Ein geschwindigkeitsabhängiges Lenkungssystem ist beispielsweise aus der bereits genannten DE 28 38 151 A1 bekannt. In dieser OS wird eine Lenkung vorgeschlagen, die eine Kolben-Zylinder-Einheit umfasst, die nur bei niedrigen Fahrzeuggeschwindigkeiten als Lenkhilfe wirksam ist, bei höheren Geschwindigkeiten dagegen nur als Lenkungsdämpfer dient. Hierzu wird auf elektronischem Wege die Fahrzeuggeschwindigkeit ausgewertet und die Kolben-Zylinder-Einheit nur bei niedrigen Fahrzeuggeschwindigkeiten mit dem nötigen Arbeitsdruck beaufschlagt, so dass diese als Lenkhilfe wirksam werden kann. Diese Vorrichtung erfordert jedoch einerseits eine Erfassung der Fahrzeuggeschwindigkeit sowie eine elektrische oder elektronische Auswertung dieser Information, andererseits ist eine elektrisch angesteuerte Servoeinrichtung zur Drucksteuerung erforderlich. Beide Faktoren erhöhen die Kosten und die Anfälligkeit für Störungen oder Versagen durch die hohe Komplexität des Lenkungssystems und erschweren damit eine Verwendung insbesondere in Fahrzeugen kleinerer Wagenklassen.

Aus der EP 1 013 535 A1 ist ein hydraulisch unterstütztes Lenkungssystem bekannt, welches mit variablen Drosselventilen in den Hydraulikzuleitungen zu den Zylinderhalbräumen arbeitet, deren Strömungswiderstand von der Druckdifferenz zwischen dem von der Hydraulikpumpe erzeugten Druck und dem Druck im Rücklauf zum Hydraulikflüssigkeitsreservoir bestimmt wird. Dabei ist die Hydraulikpumpe mit dem das Fahrzeug antreibenden Verbrennungsmotor zwangssynchronisiert. Da der von der Hydraulikpumpe erzeugte Druck von der Motordrehzahl abhängig ist, ergibt sich eine Fahrzeuggeschwindigkeitsabhängige Charakteristik des hydraulisch unterstützten Lenkungssystems. Jedoch ist das hierzu erforderliche variable Drosselventil mechanisch aufwendig und erfordert zusätzliche hydraulische Steuerleitungen, die insbesondere eine Nachrüstung in bestehende Altfahrzeuge erschweren. Weiterhin ist eine Zwangssynchronisierung von Verbrennungsmotor und Hydraulikpumpe nicht in allen Fällen gegeben, so dass sich der Vorteil der geschwindigkeitsabhängigen Charakteristik des Lenkungssystems nicht in allen Fahrzeugen realisieren lässt.

Aus der DE 196 20 975 ist ein Dämpfungsventil für druckmittelbetätigte Arbeitskreisläufe nach dem Oberbegriff des Anspruch 1 bekannt. Es weist ein Gehäuse auf, in dessen Inneren ein Durchflusskanal ausgebildet ist. In diesem Durchflusskanal ist eine Blende angeordnet, die einen veränderbaren Durchflussquerschnitt durch das Dämpfungsventil realisiert, wobei der Durchflussquerschnitt vom Durchfluss des Druckmittels bestimmt wird. Nachteilig an diesem Dämpfungsventil ist seine relativ aufwendige mehrteilige Konstruktion, die es in der Herstellung kostenintensiv macht.

Schließlich ist aus der DE 196 51 500 C1 eine Dämpferventilanordnung für ein hydraulisches Lenkungssystem bekannt, welches ebenfalls zweiwegig aufgebaut ist. In einem Bauteil sind ein Rückschlagventil sowie ein Drosselventil kombiniert, wobei sich der Strömungswiderstand des Drosselventils an die temperaturabhängige Viskosität der Hydraulikflüssigkeit anpasst. Dies wird mittels temperaturempfindlicher mechanischer Stellelemente realisiert, die den Durchlassquerschnitt eines durch das Drosselventil realisierten Bypasswegs temperaturabhängig variieren. Eine Anpassung der Dämpfungswirkung des Drosselventils an die jeweilige Fahrsituation ist der Schrift jedoch nicht zu entnehmen.

Aufgabe der vorliegenden Erfindung war es daher, ein hydraulisch unterstütztes Lenkungssystem anzugeben, dessen Kolben-Zylindereinheit auch als Lenkungsdämpfer wirksam ist, wobei sich die Dämpfungseigenschaften auf einfache Weise automatisch an die jeweilige Fahrsituation des Kraftfahrzeugs anpassen. Eine weitere Aufgabe war es, die hierzu vorgeschlagenen Drosselelemente rein mechanisch dergestalt auszubilden, dass sie einerseits mit geringem Aufwand zu fertigen sind und andererseits einfach in bestehende hydraulisch unterstützte Lenkungssysteme zu integrieren sind.

Gelöst wird diese Aufgabe durch ein hydraulisch unterstütztes Lenkungssystem mit den Merkmalen des Hauptanspruchs. Ein solches Lenkungssystem weist eine die Bewegung des Lenkgetriebes unterstützende Kolben-Zylinder-Einheit auf. Diese besteht aus einem Kolben, der axial in einem Arbeitszylinder verschiebbar ist und diesen in zwei Zylinderräume teilt. Jeder Zylinderraum ist mit einer separaten, sowohl als Druckzuleitung als auch als Rücklaufleitung dienenden Hydraulikleitung verbunden. Beide Hydraulikleitungen sind wiederum mit einem durch Lenkbewegungen betätigten Servoventil verbunden. Insoweit ist der Aufbau des erfindungsgemäßen hydraulisch unterstützten Lenkungssystems aus dem Stand der Technik bekannt.

Erfindungsgemäß ist nun in zumindest einer Hydraulikleitung ein selbststellendes Drosselelement angeordnet, welches in mindestens einer Flussrichtung R einen variablen Strömungswiderstand aufweist. Dabei wird der Strömungswiderstand des selbststellenden Drosselelements in dieser Flussrichtung R vom Fluss von Hydraulikflüssigkeit durch das Drosselelement bestimmt. Liegt ein niedriger Durchfluss von Hydraulikflüssigkeit durch das Drosselelement vor, so stellt sich ein hoher Strömungswiderstand ein, der zu einer effektiven Dämpfung von Oszillationen bzw. sprungartigen Druckänderungen im Hydrauliksystem führt.

Ein niedriger Durchfluss von Hydraulikflüssigkeit tritt beispielsweise dann auf, wenn bei höheren Fahrzeuggeschwindigkeiten nur geringe Lenkwinkelkorrekturen vom Fahrer vorgenommen werden. Somit ergibt sich bei höheren Fahrzeuggeschwindigkeiten eine geringere hydraulische Unterstützung des Lenkungssystems, was sich positiv auf das Fahrverhalten des Fahrzeugs auswirkt, insbesondere auf seine Fahrstabilität. Weiterhin resultieren aus Störeinflüssen auf die gelenkten Räder des Fahrzeugs Bewegungen des Lenkgetriebes, die insbesondere bei nicht betätigter Lenksäule von der als Lenkungsdämpfer wirksamen Kolben-Zylindereinheit gedämpft werden. Derartige Störeinflüsse können beispielsweise aus einer Unwucht der gelenkten Räder resultieren, die sich insbesondere bei höheren Fahrzeuggeschwindigkeiten negativ auswirken kann. Ohne effektive Dämpfung des Lenkgetriebes überträgt sich diese Unwucht in Form eines für den Fahrer unangenehmen "Flatterns" auf die Lenksäule. Wird die Kolben-Zylindereinheit als Lenkungsdämpfer wirksam, so ergeben sich nur geringfügige Ausgleichsbewegungen des Kolbens im Arbeitszylinder, die von einem nur geringen Fluss von Hydraulikflüssigkeit in die Zylinderräume hinein bzw. aus den Zylinderräumen heraus begleitet sind.

Bei einem hohem Durchfluss von Hydraulikflüssigkeit durch das selbststellende Drosselelement stellt sich dagegen ein niedriger Strömungswiderstand ein, so dass sich eine effektive hydraulische Unterstützung von Lenkbewegungen des Fahrers ergibt. Ein hoher Durchfluss tritt beispielsweise auf, wenn der Fahrer bei niedrigster Geschwindigkeit Rangiermanöver durchführt. Hierbei werden größte Lenkwinkeländerungen innerhalb kürzester Zeit durchgeführt. Eine zu starke innere Dämpfung innerhalb des die Lenkbewegungen unterstützenden Hydrauliksystems führt zu einem nicht mehr ausreichenden Zufluss von Hydraulikflüssigkeit in die Zylinderräume, so dass die von der Kolben-Zylindereinheit auf das Lenkgetriebe ausgeübte unterstützende Kraft deutlich abnimmt. In diesem Fall ist bei den Lenkbewegungen des Fahrers eine erhöhte Kraft aufzuwenden, was sich negativ auf den Fahrkomfort auswirkt. Erfindungsgemäß ist das Drosselelement so ausgeführt, dass sich unter den geschilderten Bedingungen ein niedriger Strömungswiderstand durch das Drosselelement ergibt. Hierdurch wird sichergestellt, dass auch bei starken Lenkbewegungen die volle hydraulische Unterstützung zur Verfügung steht.

Eine analoge Funktionsweise des Drosselelements ergibt sich, wenn sich die hydrodynamische Dämpfung des Drosselelements mit der beschriebenen Charakteristik an die Geschwindigkeit der Druckänderung in der Hydraulikleitung zwischen Servoventil und Drosselelement oder auf die Größe der dynamisch vor und nach dem Drosselelement auftretenden Druckdifferenz anpasst, anstatt auf den Fluss von Hydraulikflüssigkeit durch das Drosselelement zu reagieren.

In einer vorteilhaften Ausführungsform weist das Drosselelement nur einen Strömungsweg auf. Hierdurch wird der konstruktive und fertigungstechnische Aufwand des Drosselelements im Vergleich zu den aus dem Stand der Technik bekannten mehrwegigen Dämpfungsventilen wesentlich verringert, wodurch sich niedrige Fertigungskosten realisieren lassen.

Besondere Vorteile ergeben sich, wenn sich der Strömungswiderstand durch das Drosselelement in der Flussrichtung R durch eine geeignete Konstruktion des Drosselelements im wesentlichen kontinuierlich mit dem Fluss von Hydraulikflüssigkeit verändert. Durch die kontinuierliche Veränderung der inneren Dämpfung des Hydrauliksystems, insbesondere der als Lenkungsdämpfer dienenden Kolben-Zylinder-Einheit, passen sich die Eigenschaften des hydraulisch unterstützen Lenkungssystems kontinuierlich an die fahrtechnischen Anforderungen an, ohne dass der Fahrer eine abrupte Änderung der Lenkungseigenschaften wahrnimmt, welche als störend empfunden würde.

Weitere Vorteile ergeben sich, wenn das selbststellende Drosselelement eine in bezug auf die Strömungsrichtung der Hydraulikflüssigkeit unsymmetrische Strömungswiderstands-Kennlinie aufweist, mithin eine "Sperrrichtung" und eine "Durchlassrichtung" aufweist. Insbesondere ist es vorteilhaft, wenn in beiden Hydraulikleitungen derartige selbststellende Drosselelemente angeordnet sind. Bezogen auf den Druckzulauf in die Zylinderräume werden die Drosselelemente dabei vorteilhaft jeweils in Durchflussrichtung angeordnet. Eine solche Anordnung lässt ein schnelles Befüllen desjenigen Zylinderraums zu, der zu einer die Lenkbewegung unterstützenden Kraft auf das Lenkgetriebe beiträgt, so dass auch bei schnellen Lenkbewegungen die volle hydraulische Unterstützungskraft zur Verfügung steht. In entgegengesetzter Flussrichtung ergibt sich die für einen Lenkungsdämpfer erforderliche hohe Dämpfung.

Als zusätzliches Komfort- und Sicherheitsmerkmal können Drosselelemente verwendet werden, die in Sperrrichtung bis zu einem maximalen Fluss von Hydraulikflüssigkeit einen hohen Strömungswiderstand aufweisen, d.h. eine hohe innere Dämpfung realisieren. Insbesondere ist es von Vorteil, wenn der Strömungswiderstand in dieser Sperrrichtung unabhängig vom Fluss von Hydraulikflüssigkeit bis zum Erreichen der Schwelle im wesentlichen konstant bleibt. Bei Überschreiten des maximalen Flusses hingegen "öffnet" sich das Drosselelement in einen "Sicherheitszustand", d.h. sein Strömungswiderstand verringert sich vorteilhaft sprungartig auf einen niedrigen Wert, um die volle Unterstützungswirkung des Hydrauliksystems zu realisieren.

In einer besonders einfachen Ausführung des erfindungsgemäßen hydraulisch unterstützten Lenkungssystems weist das selbststellende Drosselelement in der Flussrichtung R einen Durchflusszustand mit geringem Strömungswiderstand und einen Dämpfungszustand mit erhöhtem Strömungswiderstand auf. Mit diesen zwei Zuständen des Drosselelements lassen sich bereits die elementaren Funktionen des erfindungsgemäßen Lenkungssystems, nämlich eine hohe innere Dämpfung bei höheren Geschwindigkeiten und eine niedrige innere Dämpfung bei starken Lenkbewegungen realisieren.

Die in den Ausführungsbeispielen näher erläuterten Ausführungsformen realisieren zusätzlich erhebliche Kostenvorteile bei der Fertigung und Implementierung der Drosselelemente. Diese bestehen aus wenigen, kostengünstig zu fertigenden Teilen und können mit geringem Aufwand so ausgeführt werden, dass sie in bestehende Konstruktionen von hydraulisch unterstütze Lenkungssysteme integriert werden können, ohne wesentliche Änderungen erforderlich zu machen. Insbesondere eröffnet sich hierdurch die überaus vorteilhafte Möglichkeit der einfachen und kostengünstigen Nachrüstung älterer Fahrzeuge.

Weitere Merkmale und Vorteile ergeben sich aus den Unteransprüchen sowie den nun folgenden Ausführungsbeispielen. Diese sind exemplarisch und nicht einschränkend zu verstehen und werden anhand der Zeichnung erläutert. In dieser zeigen:
- Fig. 1:: eine schematische Darstellung eines hydraulisch unterstützten Lenkungssystems,
- Fig. 2:: eine Aufsicht auf ein erfindungsgemäßes Drosselelement im Dämpfungszustand,
- Fig. 3:: einen Schnitt längs der Schnittlinie A- A in Fig. 2 durch ein erstes Drosselelement,
- Fig. 4:: den Schnitt durch das Drosselelement aus Fig. 3, wobei dessen Strömungswiderstand durch einen Hydraulikflüssigkeitsstrom verringert ist,
- Fig. 5:: einen Schnitt längs der Schnittlinie A- A in Fig. 2 durch ein zweites Drosselelement
- Fig. 6:: einen Schnitt längs der Schnittlinie A- A in Fig. 2 durch ein drittes Drosselelement, welches auch als Rückschlagventil wirksam ist,
- Fig. 7:: eine Aufsicht auf ein viertes Drosselelement mit abgestützten Membransegmenten, und
- Fig. 8:: einen Schnitt durch das Drosselelement aus Fig. 7 längs der Schnittlinie B - B.

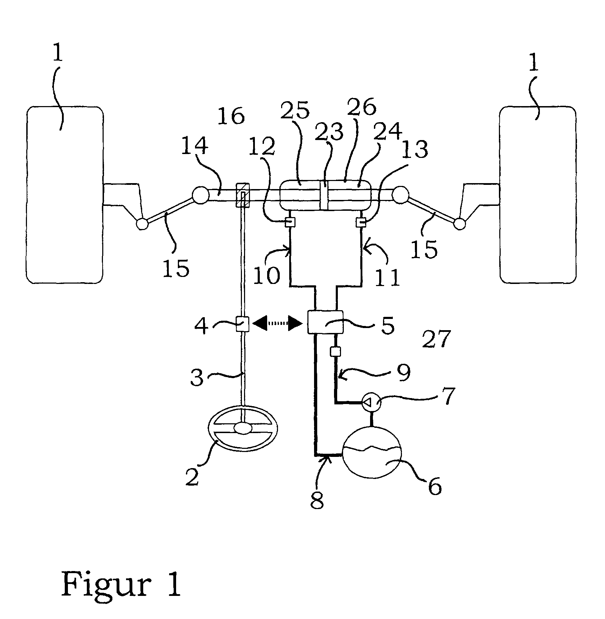

Der Aufbau eines hydraulisch unterstützten Lenkungssystems ist schematisch in Figur 1 gezeigt. Die Lenkbewegungen des Fahrers auf das Steuerrad 2 werden über die Lenksäule 3 auf ein Ritzel 16 übertragen. Dieses greift in Zähne ein, die auf der Zahnstange 14 ausgebildet sind. Aus einer Drehbewegung des Steuerrads 2 resultiert somit eine Translationsbewegung der Zahnstange 14. Diese Translationsbewegung wird über Spurstangen 15 auf die Räder 1 des Fahrzeugs übertragen und verändert den Anstellwinkel der Räder 1 gegen die Fahrzeuglängsachse.

Die Translationsbewegung der Spurstange 14 wird hydraulisch unterstützt durch eine Kolben-Zylinder-Einheit, welche aus einem Kolben 23 besteht, der sich in einem Arbeitszylinder 24 bewegt und diesen in zwei Zylinderräume 25, 26 teilt. Beide Zylinderräume 25, 26 können über Hydraulikleitungen 10, 11 mit Hydraulikflüssigkeit beaufschlagt werden. Die Hydraulikleitungen 10, 11 sind mit einem Servoventil 5 verbunden, dessen Stellung von einem auf der Lenksäule 3 angeordneten Lenkwinkelgeber 4 beeinflusst wird, welcher auf die Lenkbewegungen des Fahrers empfindlich ist. Das Servoventil 5 ist einerseits über einen Hydraulikdruckleitung 9 mit einer Servopumpe 7 verbunden, die in einem Rücklaufbehälter 6 gesammelte Hydraulikflüssigkeit fördert. Die Funktion des Servoventils 5 entspricht der aus dem Stand der Technik bekannten Funktionsweise, wie sie sich beispielsweise aus der DE 196 51 500 C1 ergibt. Weiterhin kann zwischen Servopumpe 7 und Servoventil 5 ein (hier nicht gezeigter) Drucksammelbehälter angeordnet sein, in dem druckbeaufschlagte Hydraulikflüssigkeit gesammelt wird. Andererseits ist das Servoventil 5 über eine Hydraulikrückleitung 8 mit dem Rücklaufbehälter 6 verbunden.

Bei Lenkbewegungen des Fahrers verbindet das Servoventil 5 jeweils einen Zylinderraum 25, 26, z.B. 25 mit der Hydraulikdruckleitung 9 und einen Zylinderraum 25, 26, z.B. 26, mit der Hydraulikrückleitung 8, so dass sich ein Fluss von druckbeaufschlagter Hydraulikflüssigkeit in den Zylinderraum 25 hinein und aus dem Zylinderraum 26 heraus ergibt. Hieraus resultiert eine Kraft auf die Zahnstange 14, die vom Zylinderraum 25 in Richtung des Zylinderraums 26 wirkt und die die Stellbewegung der Räder 1 unterstützt. Dabei hängt der Strömungsquerschnitt des Servoventils 5 von der Drehgeschwindigkeit der Lenksäule 3 dergestalt ab, dass sich bei schnellen Lenkbewegungen ein hoher Fluss von Hydraulikflüssigkeit in die Zylinderräume 25, 26 hinein resp. heraus ergibt. Insoweit ist der Aufbau des hydraulisch unterstützen Lenkungssystems aus dem Stand der Technik bekannt.

Damit die im Fahrbetrieb auf die Räder 1 einwirkenden Störungen z.B. durch Fahrbahnunebenheiten oder Unwuchten, welche über das leichtgängige Lenkgetriebe auf die Kolben-Zylinder-Einheit übertragen werden, nicht zu Oszillationen oder sprunghaften, von unerwünschter Geräuschentwicklung begleiteten Drucksprüngen im Hydrauliksystem führen, sind in den Hydraulikleitungen 10, 11 Drosselelemente 12, 13 angeordnet. Grundsätzlich kann die Verwendung nur eines Drosselelements 12 ausreichend sein, bessere Ergebnisse lassen sich jedoch mit jeweils mindestens einem Drosselelement je Hydraulikleitung 10, 11 erzielen.

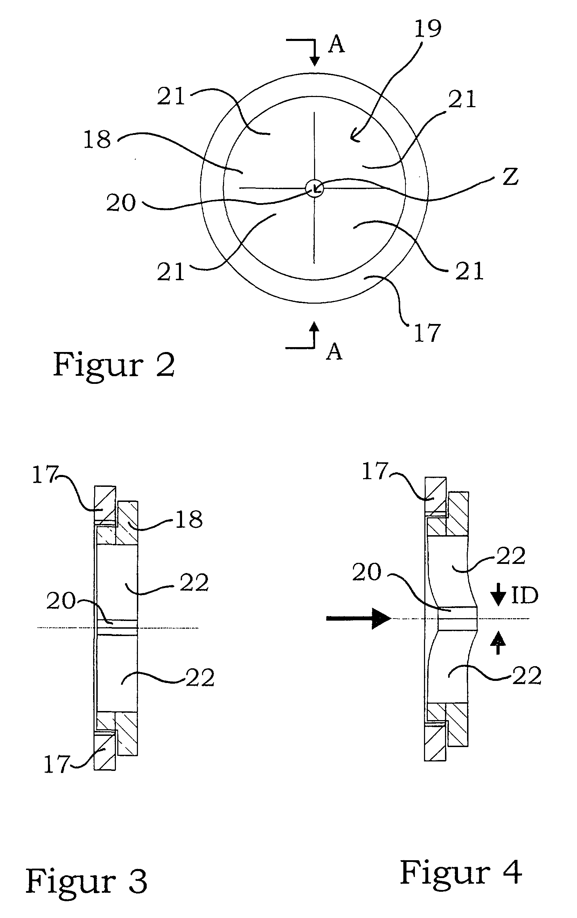

Ein möglicher Aufbau der Drosselelemente 12, 13 ist aus Figur 2 ersichtlich, die ein solches Drosselelement 12, 13 in Aufsicht zeigt. Das selbststellende Drosselelement 12, 13 wird von einer gegen die Hydraulikflüssigkeit resistenten kreisförmigen Membran 18 gebildet, die quer zur Strömungsrichtung in den Hydraulikleitungen 10, 11 angeordnet ist. Die Membran 18 ist an ihrem äußeren Umfang in einer ringförmigen Fassung 17 gehaltert. Weiterhin ist die Membran 18 in einem zentralen Bereich 19 in mehrere Segmente 21 geteilt, die um ein gemeinsames Zentrum Z angeordnet sind. Im gezeigten Ausführungsbeispiel wird die kreisförmige Membran 18 durch senkrecht verlaufende Schnittflächen 22 in vier Segmente 21 geteilt. Die Schnittflächen 22 verlaufen nicht bis zum äußeren Umfang der Membran 18, so dass diese einstückig zusammenhängend bleibt. Durch das Zentrum Z verläuft die Längsachse einer in der Membran 18 ausgeführten zentralen Bohrung 20, wobei die Längsachse in Strömungsrichtung orientiert ist.

Dabei besteht die Membran vorteilhaft aus einem natürlichen oder synthetischen Gummi, z.B. aus NBR ("neoprene butylene rubber"), HNBR oder einem Poly-Styrol-Butadien-Copolymer, der gegen die Hydraulikflüssigkeit resistent und gegen die im Betrieb auftretenden Temperaturen beständig ist. Insbesondere können viele der im Automobilbau für Hydrauliksysteme als Dichtmaterialien eingesetzten gummielastischen Werkstoffe verwendet werden. Weiterhin kann auch die Verwendung dauerelastischer metallischer Werkstoffe für die Membran 18 vorteilhaft sein. Die Fassung besteht beispielsweise aus einem Metall wie Aluminium oder aus einem ebenfalls gegen die Hydraulikflüssigkeit resistenten und bei den auftretenden Temperaturen beständigen Kunststoff., z.B. einem Duroplasten.

Die zentrale Bohrung 20 dient dazu, dass auch bei verschwindendem Fluss von Hydraulikflüssigkeit durch das Drosselelement 12, 13 ein endlicher Strömungswiderstand auftritt und die Zylinderräume 25, 26 nicht vollständig vom Servoventil 5 abgeschlossen sind. Dies wirkt sich insbesondere positiv auf das Verhalten der Kolben-Zylinder-Einheit als reiner Lenkungsdämpfer aus. Eine zentrale Bohrung 20 ist jedoch nicht unbedingt erforderlich.

Aus Figur 3 ist ein erstes Drosselelement nach Fig. 2 im Schnitt längs der Linie A - A gezeigt. Die Membran 18 ist scheibenförmig ausgebildet. Typische Abmessungen der Fassung sind ein Außendurchmesser von ca. 10 Millimetern und eine lichte Weite von 8 Millimetern. Die aus NBR bestehende Membran 18 weist eine Dicke von einigen Millimetern auf, vorteilhaft sind 1 bis 2 Millimeter je nach Flexibilität des für die Membran 18 verwendeten Materials. Der Durchmesser der zentralen Bohrung 20 beträgt typisch unter 1 Millimeter. Der Durchmesser der zentralen Bohrung 20 bestimmt den Innendurchmesser ID des Strömungswegs durch das Drosselelement im gezeigten Ruhezustand. Der Durchmesser des in die Segmente 21 geteilten zentralen Bereichs 19 der Membran 18 beträgt einige Millimeter, vorteilhaft sind ca. 5 Millimeter. Eine Teilung der Membran 18 in mehr oder weniger als vier Segmente 21 ist ohne weiteres möglich und kann je nach Einsatzzweck vorteilhaft sein.

Aus Figur 4 ist die sich bei einem Fluss von Hydraulikflüssigkeit durch das Drosselelement 12, 13 ergebende Verformung der Membran 18 und die damit einhergehende Aufweitung des Innendurchmessers ID des Strömungswegs durch das Drosselelement 12, 13 ersichtlich. Bei einem Fluss von Hydraulikflüssigkeit in der durch einen Pfeil angedeuteten Flussrichtung R verformt sich die Membran 18 in ihrem segmentierten zentralen Bereich 19 elastisch, so dass sich der Innendurchmesser ID des Strömungswegs durch das Drosselelement 12, 13 vergrößert. Zusätzlich kann sich ein Fluss von Hydraulikflüssigkeit zwischen den angrenzenden Segmenten 21 hindurch ergeben. Nimmt der Fluss von Hydraulikflüssigkeit in der gezeigten Richtung R zu, so nimmt die Aufweitung des Innendurchmessers ID ebenfalls zu. Nimmt der Fluss dagegen wieder ab, so relaxiert die Membran 18 wieder in ihren Ausgangszustand.

Im gezeigten Ausführungsbeispiel ist die Membran 18 weitgehend symmetrisch aufgebaut, so dass sich eine vergleichbare Charakteristik des Strömungswiderstands des Drosselelements 12, 13 in beiden möglichen Flussrichtungen ergibt.

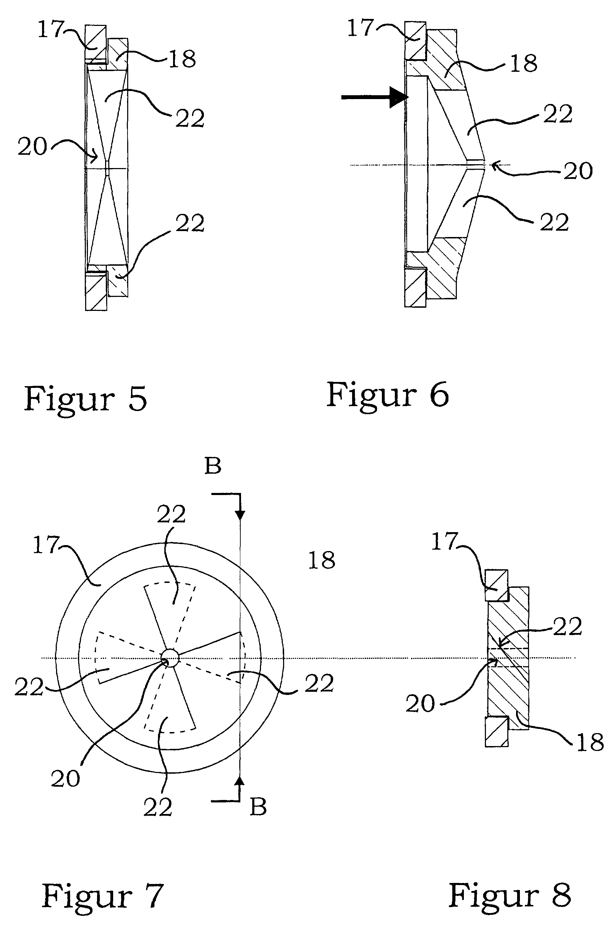

Figur 5 zeigt ein zweites Ausführungsbeispiel nach Figur 2 ebenfalls im Schnitt längs der Linie A - A. Die Grundgeometrie und alle Abmessungen sind vergleichbar mit denen des ersten Ausführungsbeispiels, jedoch weist die Membran auf ihren beiden kreisförmigen Oberflächen konische Vertiefungen auf, die die Dicke der Membran zu ihrem Zentrum hin, welches mit dem gemeinsamen Zentrum Z der Segmente 21 zusammenfällt, verringern. Hieraus resultiert eine vom Zentrum Z nach außen stetig zunehmende Dicke der Segmente 21, wodurch sich der Innendurchmesser ID des Strömungswegs durch das Drosselelement 12, 13 bei geringem Fluss von Hydraulikflüssigkeit stärker vergrößert als bei hohem Fluss. Da die hydrodynamische Dämpfungswirkung des Drosselelements 12, 13 in erster Linie vom Querschnitt des Strömungswegs bestimmt wird und dieser wiederum quadratisch vom Innendurchmesser ID abhängt, kann hierdurch eine im wesentlichen zur Flussänderung proportionale Veränderung der Dämpfungswirkung erzielt werden.

Figur 6 zeigt ein drittes Ausführungsbeispiel nach Figur 2 im Schnitt längs der Schnittlinie A - A. In diesem Fall ist die Membran 18 nicht scheibenförmig ausgebildet, sondern weist die Form eines Kegelmantels auf, wobei die Kegelspitze auf einer in Flussrichtung orientierten Linie mit dem Zentrum Z liegt, d.h. die Kegelachse ist kolinear mit der Flussrichtung in der Hydraulikleitung 10, 11 ausgerichtet. Der Kegelmantel ist analog zu den vorstehenden Ausführungsbeispielen durch senkrecht auf der Ebene der Fassung 17 stehende Schnittflächen 22 in vier Segmente 21 geteilt. Weiterhin nimmt die Wandstärke des Kegelmantels zur Kegelspitze hin ab, wodurch eine mit dem zweiten Ausführungsbeispiel vergleichbare Dämpfungscharakteristik erzielt wird.

Durch die kegelförmige Ausbildung der Membran 18 wird ein unsymmetrisches Dämpfungsverhalten des Drosselelements 12, 13 in Bezug auf die Flussrichtung der Hydraulikflüssigkeit erzielt. In der mit dem Pfeil in Fig. 6 gekennzeichneten Flussrichtung R entspricht die Strömungswiderstand - Fluss - Charakteristik des Drosselelements 12, 13 im wesentlichen derjenigen des zweiten Ausführungsbeispiels. In der entgegengesetzten Flussrichtung dagegen führt eine Flusszunahme durch das Drosselelement nicht zu einer Vergrößerung des Innendurchmessers ID des Strömungswegs, da sich die Segmente 21 durch gegenseitiges Abstützen nicht "auseinanderbiegen" können. Bis zu einem maximalen Fluss bleibt der Innendurchmesser ID praktisch konstant, d.h. das Drosselelement 12, 13 realisiert einen im wesentlichen flussunabhängigen hohen Strömungswiderstand, dessen Größe praktisch nur vom Durchmesser der zentralen Bohrung 20 bestimmt ist. Wird ein maximaler Fluss jedoch überschritten, so ergibt sich eine so starke Krafteinwirkung auf die Segmente 21, so dass sich diese elastisch verformen und den Strömungsweg freigeben. Auf diese Weise kann ein reversibler "Sicherheitszustand" realisiert werden, der in Extremsituationen einen hohen Fluss von Hydraulikflüssigkeit bei niedriger Strömungsdämpfung zulässt und damit dynamische Lenkmanöver erlaubt.

Das dritte Ausführungsbeispiel realisiert demnach ein selbststellendes Drosselelement, welches in einer als "Durchlassrichtung" bezeichneten ersten Flussrichtung einen Strömungswiderstand aufweist, der mit zunehmendem Fluss von Hydraulikflüssigkeit kontinuierlich abnimmt, d.h. hier liegt ein "Durchflusszustand" vor. In der entgegengesetzten Flussrichtung weist das selbststellende Drosselelement einen "Sperrzustand" mit quasi konstantem hohem Strömungswiderstand auf. Bei Überschreiten eines maximalen Flusses schaltet das Drosselelement 12, 13 in einen "Sicherheitszustand" mit geringem Strömungswiderstand. Hierbei werden alle Funktionen mit einem einzigen Strömungsweg und einfachster mechanischer Ausführung realisiert.

Drosselelemente 12, 13 nach Figur 6 werden in vorteilhafter Weise jeweils mindestens einfach in beiden Hydraulikleitungen 10, 11 eingesetzt, wobei sie in Zulaufrichtung zum jeweiligen Zylinderraum 25, 26 in Durchflussrichtung orientiert werden, so dass sie einen niedrigen Strömungswiderstand im Zulauf realisieren und somit hohe Stellgeschwindigkeiten der Kolben-Zylinder-Einheit erlauben.

Weiterhin kann eine mechanische Abstützung der Segmente 21 vorteilhaft sein, die den sich bei hohen Flüssen von Hydraulikflüssigkeit einstellenden Strömungsquerschnitt / -widerstand begrenzt. Hierzu kann beispielsweise ein mit der Fassung 17 verbundener Käfig vorgesehen werden, der Anlageflächen für die maximal ausgelenkten Segmente 21 ausbildet und auf diese Weise eine weitere Vergrößerung des Innendurchmessers ID des Strömungswegs in einer oder beiden Strömungsrichtungen mechanisch verhindert.

Figur 7 zeigt schließlich eine alternative Ausführung der Schnittflächen 22 in Aufsicht, die zu einer erhöhten Widerstandsfähigkeit der Membran 18 bezüglich einer vorzeitigen Aufweitung des Innendurchmessers ID des Strömungswegs bei höheren Flüssen von Hydraulikflüssigkeit führt. Hierbei sind die Schnittflächen nicht senkrecht zur Membranebene ausgeführt, sondern verlaufen durch das Zentrum Z hindurch unter einem Winkel gegen die Membranebene, der vorteilhaft im Bereich zwischen 30° und 60° liegt. Hierdurch wird eine gegenseitige Abstützung der Segmente 21 aneinander in der Flussrichtung erzielt, die ein vorzeitiges oder zu leichtes "Aufbiegen" der Segmente 21 verhindert. Figur 8 zeigt dieses Ausführungsbeispiel im Schnitt längs der Linie B- B, woraus nochmals die veränderte Orientierung der Schnittflächen 22 deutlich wird.

Ein besonderer Vorteil, der allen Drosselelementen nach Figur 2 bis 8 innewohnt, ist die Tatsache, dass der Ausfall eines Drosselelements 12, 13 nicht zu einem Ausfall des hydraulischen Systems führt. Sollte beispielsweise die Membran 18 beschädigt werden, so dass sie nicht mehr in ihre Gleichgewichtslage relaxieren kann, so resultiert hieraus nur eine geringfügig verringerte und vor allem vom Fahrzustand des Fahrzeugs weitgehend unabhängige innere Dämpfung des Lenkungssystems, die sich jedoch nicht auf die Fahrsicherheit auswirkt.

Schließlich sind die Drosselelemente nach Figur 2 bis 8 bereits im Sinne der DE 196 51 500 C1 temperaturkompensiert, d.h. die Anpassung ihres Strömungswiderstands wird bereits ohne zusätzliche konstruktive Maßnahmen durch die temperaturabhängige Viskosität der Hydraulikflüssigkeit mitbestimmt. Aufgrund der dynamischen Effekte, die beim Strömen einer viskosen Flüssigkeit auftreten, treten bei höherer Viskosität der Flüssigkeit höhere Kräfte auf eine quer zur Stromrichtung angeordnete Blende auf. Diese Kräfte führen bei der erfindungsgemäß segmentierten Membran 18 der Drosselelemente 12, 13 nach Figur 2 bis 8 zu einer stärkeren Aufweitung des Innendurchmessers ID, wodurch sich bei höherer Viskosität der Hydraulikflüssigkeit (= tiefere Temperatur) eine stärkere Verringerung des Strömungswiderstands ergibt als bei niedriger Viskosität (= höhere Temperatur). Hieraus resultiert eine Dämpfungswirkung, die bei tieferen Temperaturen kleiner ist als bei höheren Temperaturen.

Das aus den Ausführungsbeispielen ersichtliche Drosselelement kann ebenfalls vorteilhaft in der Hydraulikdruckleitung 9 eingesetzt werden, um unerwünschte Druckstöße zu dämpfen und somit den mit starker Geräuschentwicklung einhergehenden bekannten "Wasserleitungseffekt" zu unterdrücken. Dabei bietet sich die Verwendung eines Drosselelements gemäß des dritten Ausführungsbeispiels (Figur 6) an, welches vorteilhaft alternativ oder zusätzlich zu einem an dieser Stelle üblicherweise verwendeten Rückschlagventil 27 eingesetzt werden kann.

Neben den aus den Figuren 2 bis 8 ersichtlichen Ausführungsformen sind noch eine Vielzahl weiterer Ausführungsformen von Drosselelementen möglich, die die nach Hauptanspruch erforderliche Strömungswiderstands - Fluss-Charakteristik aufweisen. Beispielsweise weist auch ein auf einer ringförmigen Blende basierendes Drosselelement, wobei in deren Zentrum eine gegen eine Rückstellkraft in und entgegen der Flussrichtung gefedert gelagerte Kugel, die vom Fluss von Hydraulikflüssigkeit aus ihrer Ruhelage ausgelenkt wird und die zentrale Bohrung der Blende je nach Auslenkung mehr oder weniger ausfüllt und damit den Strömungsquerschnitt durch die Blende variiert, eine entsprechende Charakteristik auf. Auch Lenkungssysteme, die auf abweichenden Drosselelementen als den aus Fig. 2 bis 8 ersichtlichen basieren, sind Gegenstand der Anmeldung.

Es ist offensichtlich, dass das vorliegende Konzept auch auf hydraulisch unterstützte Lenkungssysteme anwendbar ist, die einen von Figur 1 abweichenden Aufbau aufweisen, solange sie auf Hydrauliksystemen basieren, in denen Oszillationen und starke Druckschwankungen auftreten können, die vorteilhaft mittels Drosselelementen unterdrückt oder gedämpft werden können, deren Strömungswiderstand sich in der in Anspruch 1 beschriebenen Weise selbststellend an den Fluss von Hydraulikflüssigkeit durch das Drosselelement anpasst. Auch eine solche Konzeptübertragung wird hiermit zum Gegenstand dieser Anmeldung gemacht.

Weiterhin können im erfindungsgemäßen Lenkungssystem nicht nur ein oder zwei, sondern auch weitere Drosselelemente 12, 13 mit den geforderten Eigenschaften, insbesondere nach den vorstehenden Ausführungsbeispielen, verwendet werden. Insbesondere bei sehr leichtgängigen Lenkgetrieben kann eine Verwendung mehrerer Drosselelemente 12, 13 in einer Hydraulikleitung 10, 11 vorteilhaft sein, um die geforderten hydraulischen Dämpfungseigenschaften zu realisieren.

## Patentansprüche

1. Hydraulisch unterstütztes Lenkungssystem mit einem Lenkgetriebe, welches von einer hydraulischen Kolben-Zylindereinheit angetrieben wird, bestehend aus einem Kolben (23), der axial in einem Arbeitszylinder (24) verschiebbar ist und diesen in zwei Zylinderräume (25, 26) teilt, wobei jeder Zylinderraum (25, 26) mit einer separaten, sowohl als Druckzuleitung als auch als Rücklaufleitung dienenden Hydraulikleitung (10, 11) verbunden ist, wobei beide Hydraulikleitungen (10, 11) wiederum mit einem durch Lenkbewegungen betätigten Servoventil (5) verbunden sind, wobei in zumindest einer Hydraulikleitung (10, 11) ein selbststellendes Drosselelement (12, 13) angeordnet ist, welches in mindestens einer Flussrichtung R einen variablen Strömungswiderstand aufweist, wobei der Strömungswiderstand in dieser Flussrichtung R vom Fluss von Hydraulikflüssigkeit durch das selbststellende Drosselelement (12, 13) bestimmt wird, nämlich sich ein hoher Strömungswiderstand bei niedrigem Fluss einstellt und sich ein niedriger Strömungswiderstand bei hohem Fluss einstellt, **dadurch gekennzeichnet, dass** das selbststellende Drosselelement (12, 13) von einer gegen Hydraulikflüssigkeit resistenten Membran (18) gebildet wird, die quer zur Strömungsrichtung angeordnet ist und die in einem zentralen Bereich (19) in mehrere Segmente (21) geteilt ist, die um ein gemeinsames Zentrum Z angeordnet sind.

2. Hydraulisch unterstütztes Lenkungssystem nach Anspruch 1, **dadurch gekennzeichnet, dass** die Membran (18) als Kegelmantel ausgebildet ist, wobei die Kegelachse kolinear mit der Flussrichtung in der Hydraulikleitung (10, 11) ausgerichtet ist und die Kegelspitze das gemeinsame Zentrum Z bildet.

3. Hydraulisch unterstütztes Lenkungssystem nach Anspruch 1, **dadurch gekennzeichnet, dass** das Drosselelement (12, 13) nur einen Strömungsweg aufweist.

4. Hydraulisch unterstütztes Lenkungssystem nach Anspruch 1, **dadurch gekennzeichnet, dass** sich der Strömungswiderstand in der Flussrichtung R im wesentlichen kontinuierlich mit dem Fluss von Hydraulikflüssigkeit verändert.

5. Hydraulisch unterstütztes Lenkungssystem nach Anspruch 1, **dadurch gekennzeichnet, dass** das selbststellende Drosselelement (12, 13) eine in bezug auf die Strömungsrichtung der Hydraulikflüssigkeit unsymmetrische Strömungswiderstands-Kennlinie aufweist, mithin eine "Sperrrichtung" und eine "Durchlassrichtung" aufweist.

6. Hydraulisch unterstütztes Lenkungssystem nach Anspruch 5, **dadurch gekennzeichnet, dass** das selbststellende Drosselelement (12, 13) in Sperrrichtung einen vom Fluss von Hydraulikflüssigkeit im wesentlichen unabhängigen hohen Strömungswiderstand aufweist.

7. Hydraulisch unterstütztes Lenkungssystem nach Anspruch 5, **dadurch gekennzeichnet, dass** das selbststellende Drosselelement (12, 13) in Sperrrichtung bei Überschreiten eines maximalen Flusses in einen Sicherheitszustand mit geringem Strömungswiderstand übergeht.

8. Hydraulisch unterstütztes Lenkungssystem nach Anspruch 1, **dadurch gekennzeichnet, dass** das selbststellende Drosselelement (12, 13) in der Flussrichtung R mindestens einen Durchflusszustand mit geringem Strömungswiderstand und einen Dämpfungszustand mit erhöhtem Strömungswiderstand aufweist.

9. Hydraulisch unterstütztes Lenkungssystem nach Anspruch 5, **dadurch gekennzeichnet, dass** in beiden Hydraulikleitungen (10, 11) selbststellende Drosselelemente (12, 13) angeordnet sind, wobei die Drosselelemente (12, 13) bezogen auf den Druckzulauf in die Zylinderräume (25, 26) jeweils in Durchflussrichtung angeordnet sind.

## Claims

1. A hydraulically assisted steering system with a steering gear that is driven by a hydraulic piston and cylinder unit, said steering system comprising a piston (23) that is axially slidable in a working cylinder (24) and divides said cylinder into two cylinder compartments (25, 26), each cylinder compartment (25, 26) being connected to a separate hydraulic passage (10, 11) serving both as a pressure feed passage and as a return passage, the two hydraulic passages (10, 11) being in turn connected to a servo valve (5) actuated by steering motions, a self-adjusting throttle element (12, 13) being disposed in at least one hydraulic passage (10, 11), said throttle element having, in at least one flow direction R, a variable flow resistance, the flow resistance in this flow direction R being determined by the flow of hydraulic fluid through the self-adjusting throttle element (12, 13) with the flow resistance being high when there is a low flow and the flow resistance being low when there is a high flow, **characterized in that** the self-adjusting throttle element (12, 13) is formed by a hydraulic fluid resistant membrane (18) that is disposed across the flow direction and is divided, in a central region (19), in several segments (21) arranged about a common center Z.

2. The hydraulically assisted steering system according to claim 1, **characterized in that** the membrane (18) is configured as a cone shaped envelope with the axis of the cone being colinear with the flow direction in the hydraulic passage (10, 11) and the point of the cone forming the common center Z.

3. The hydraulically assisted steering system according to claim 1, **characterized in that** the throttle element (12, 13) has only one flow path.

4. The hydraulically assisted steering system according to claim 1, **characterized in that** the flow resistance in the flow direction R varies substantially continuously with the flow of hydraulic fluid.

5. The hydraulically assisted steering system according to claim 1, **characterized in that** the self-adjusting throttle element (12, 13) has a flow resistance characteristic curve that is unsymmetrical about the flow direction of the hydraulic fluid and accordingly has a "shutting off direction" and a "permitting flow direction".

6. The hydraulically assisted steering system according to claim 5, **characterized in that**, in the shutting off direction, the self-adjusting throttle element (12, 13) has a high flow resistance that is substantially independent of the hydraulic fluid flow.

7. The hydraulically assisted steering system according to claim 5, **characterized in that**, in the shutting off direction, the self-adjusting throttle element (12, 13) goes into a stand-by mode with low flow resistance when a maximum flow is exceeded.

8. The hydraulically assisted steering system according to claim 1, **characterized in that**, in the flow direction R, the self-adjusting throttle element (12, 13) has a flow condition with low flow resistance and a flow-limiting condition with increased flow resistance.

9. The hydraulically assisted steering system according to claim 5, **characterized in that** self-adjusting throttle elements (12, 13) are disposed in either of the two hydraulic passages (10, 11), the throttle elements (12, 13) being arranged in the respective flow direction of the pressure fed to the cylinder compartments (25, 26).

## Revendications

1. Système de direction assistée hydraulique avec une direction actionnée par un ensemble piston-cylindre hydraulique constitué d'un piston (23) monté à coulissement axial dans un cylindre de pression (24) qu'il divise en deux compartiments (25, 26), chaque compartiment (25, 26) du cylindre étant relié à un tuyau hydraulique (10, 11) distinct qui sert à la fois de tuyau d'alimentation en pression et de tuyau de retour, les deux tuyaux hydrauliques (10, 11) étant à leur tour raccordés à une servo-soupape (5) actionnée par les mouvements de direction, un élément d'étranglement à régulation automatique (12, 13) étant disposé dans au moins un tuyau hydraulique (10, 11), ledit élément d'étranglement présentant une résistance à l'écoulement variable dans au moins un sens d'écoulement R, la résistance à l'écoulement dans ledit sens d'écoulement R étant déterminée par le flux de fluide hydraulique traversant l'élément d'étranglement (12, 13), à savoir que la résistance à l'écoulement est élevée lorsque le flux est faible et faible lorsque le flux est élevé, **caractérisé en ce que** l'élément d'étranglement à régulation automatique (12, 13) est formé par une membrane (18) résistant au fluide hydraulique, ladite membrane étant disposée transversalement par rapport au sens d'écoulement et étant divisée, dans une zone centrale (19), en plusieurs segments (21) disposés autour d'un centre commun Z.

2. Système de direction assistée hydraulique selon la revendication 1, **caractérisé en ce que** la membrane (18) est conformée en forme de jupe conique, l'axe du cône étant colinéaire au sens d'écoulement dans le tuyau hydraulique (10, 11) et la pointe du cône formant le centre commun Z.

3. Système de direction assistée hydraulique selon la revendication 1, **caractérisé en ce que** l'élément d'étranglement (12, 13) ne présente qu'un seul chemin d'écoulement.

4. Système de direction assistée hydraulique selon la revendication 1, **caractérisé en ce que** la résistance à l'écoulement dans le sens d'écoulement R varie sensiblement continuellement en fonction du flux de fluide hydraulique.

5. Système de direction assistée hydraulique selon la revendication 1, **caractérisé en ce que** l'élément d'étranglement à régulation automatique (12, 13) présente une caractéristique de résistance à l'écoulement asymétrique par rapport au sens d'écoulement du fluide hydraulique et qu'il comporte donc un « sens de fermeture » et un « sens de passage ».

6. Système de direction assistée hydraulique selon la revendication 5, **caractérisé en ce que** l'élément d'étranglement à régulation automatique (12, 13) présente, dans le sens de fermeture, une résistance à l'écoulement élevée sensiblement indépendante du flux de fluide hydraulique.

7. Système de direction assistée hydraulique selon la revendication 5, **caractérisé en ce que**, dans le sens de fermeture, l'élément d'étranglement à régulation automatique (12, 13) passe à un état de disponibilité dans lequel la résistance à l'écoulement est faible lorsque le flux dépasse une valeur maximale.

8. Système de direction assistée hydraulique selon la revendication 1, **caractérisé en ce que** l'élément d'étranglement à régulation automatique (12, 13) comporte, dans le sens d'écoulement R, au moins un état de passage dans lequel la résistance à l'écoulement est faible et un état d'affaiblissement dans lequel la résistance à l'écoulement est plus élevée.

9. Système de direction assistée hydraulique selon la revendication 5, **caractérisé en ce que** des éléments d'étranglement à régulation automatique (12, 13) sont disposés dans les deux tuyaux hydrauliques (10, 11), les éléments d'étranglement (12, 13) étant disposés dans le sens de passage de la pression acheminée vers les compartiments (25,26) du cylindre.
